# EUROPÄISCHE PATENTSCHRIFT

(11) **EP 3 481 632 B1**
(45) Veröffentlichungstag und Bekanntmachung des Hinweises auf die Patenterteilung: **05.08.2020**
(21) Anmeldenummer: 17731114.9
(22) Anmeldetag: 13.06.2017
(51) Int. Cl.: B32B 37/00, B29C 45/14, B32B 37/26, B32B 37/24

(54) **TRANSFERFOLIE, VERFAHREN ZUR HERSTELLUNG EINER TRANSFERFOLIE SOWIE VERWENDUNG EINER TRANSFERFOLIE UND VERFAHREN ZUR BESCHICHTUNG EINES BAUTEILS**
TRANSFER FILM, METHOD FOR PRODUCING A TRANSFER FILM, USE OF A TRANSFER FILM, AND METHOD FOR COATING A COMPONENT
FILM DE TRANSFERT, PROCÉDÉ DE FABRICATION ET UTILISATION D'UN FILM DE TRANSFERT, ET PROCÉDÉ DE REVÊTEMENT D'UN ÉLÉMENT STRUCTURAL

(30) Priorität: 07.07.2016 DE 102016112505
(43) Veröffentlichungstag der Anmeldung: 15.05.2019
(73) Patentinhaber: Leonhard Kurz Stiftung & Co. KG, 90763 Fürth (DE)
(72) Erfinder: HEHN, Roland, 91074 Herzogenaurach (DE); FALGNER, Steffen, 90439 Nürnberg (DE)
(74) Vertreter: Zinsinger, Norbert
(86) Internationale Anmeldenummer: PCT/EP2017/064338
(87) Internationale Veröffentlichungsnummer: WO 2018/007107

(56) Entgegenhaltungen:
- EP-A2- 2 845 744
- WO-A1-2016/106207
- US-A1- 2010 196 651
- US-A1- 2014 120 329

## Beschreibung

Die Erfindung betrifft eine Transferfolie, ein Verfahren zur Herstellung einer Transferfolie sowie eine Verwendung einer Transferfolie und ein Verfahren zur Beschichtung eines Bauteils.

Aus dem Stand der Technik sind Dekorfolien zur Dekoration bekannt, wobei unterschiedliche Verfahren zum Einsatz kommen. Die Dekorfolien sind als Transferfolien ausgebildet, die eine Trägerfolie und eine von der Trägerfolie ablösbare Transferlage umfassen.

Beim IMD-Verfahren (IMD = In Mold Decoration) wird eine Transferfolie in ein Spritzgusswerkzeug gelegt und hinterspritzt. Dabei nimmt insbesondere die Trägerfolie Zugkräfte auf, die bei der Verformung der Transferfolie beim Anlegen an die Kontur der Werkzeugfläche, insbesondere in großer Geschwindigkeit durch die beim Spritzgießen auftretenden hohen Drücke und Temperaturen auftreten können, und schützt die als Lackschichten ausgebildeten Transferlagen bei der Verformung vor Rissen und anderen Beschädigungen. Auch die Oberflächengüte der übertragenen Schichten wird von dieser Trägerfolie definiert. Die Trägerfolie dient hier also als Verformungshilfe für die Transferlagen. Nachteilig ist dabei, dass die Dreidimensionalität der Verformung durch die vergleichsweise geringe Dehnbarkeit der Trägerfolie definiert und dadurch limitiert ist.

Die US 2014/0120329 A1 beschreibt eine Dekorfolie, ein damit dekoriertes Formteil und ein entsprechendes Dekorationsformverfahren. Die Dekorfolie umfasst dabei eine Trägerschicht, eine Ablöseschicht, eine Schutzschicht, eine Dekorationsmusterschicht, eine Einwirkungswiderstandsschicht und eine Haftschicht. Die Einwirkungswiderstandsschicht und die Dekorationsmusterschicht sind zwischen der Schutzschicht und der Haftschicht angeordnet, wobei die Ablöseschicht dabei zwischen der Schutzschicht und der Trägerschicht angeordnet ist.

Beim Insertmolding wird eine Transferfolie auf ein insbesondere ebenes, flaches Substrat appliziert. Anschließend wird die Trägerfolie abgezogen. Beim nachfolgenden Tiefziehen des mit den Transferlagen beschichteten Substrats zwischen den zwei Werkzeughälften eines Tiefziehwerkzeugs müssen die applizierten Transferlagen die Zugkräfte der Verformung aufnehmen. Insbesondere im Bereich von Schutzschichten kommt es dabei oft zu Rissen etc. in engen Radien.

Beim sogenannten 3DHS-Verfahren wird eine Transferfolie auf ein bereits verformtes Teil aufgelegt und heißgeprägt. Die Transferfolie wird dabei insbesondere mit Hilfe einer Vakuumansaugung und einer Vorwärmung an die Kontur des verformtes Teils schon vor dem Heißprägen angelegt und angepasst und anschließend mit einem entsprechend geformten und beheizten Prägestempel heißgeprägt. Die Trägerfolie nimmt wie beim IMD-Verfahren Zugkräfte auf und soll die zu transferierenden Lackschichten bei der Verformung vor Rissen und anderen Beschädigungen schützen.

Beim sogenannten TOM-Verfahren (Threedimensional Overlay Method) wird eine Transferfolie auf ein insbesondere ebenes, flaches Substrat appliziert. Anschließend wird die Trägerfolie abgezogen. Beim nachfolgenden Auflegen des mit den Transferlagen beschichteten Substrats auf ein bereits verformtes Teil und anschließendem Umformen des Substrats entsprechend der Teile-Form müssen die applizierten Transferlagen die Zugkräfte der Verformung aufnehmen. Insbesondere im Bereich von Schutzschichten kommt es dabei oft zu Rissen etc. in engen Radien.

Aufgabe der vorliegenden Erfindung ist es daher insbesondere, eine hinsichtlich der Verformbarkeit verbesserte Transferfolie anzugeben.

Erfindungsgemäß wird diese Aufgabe mit den Gegenständen der Ansprüche 1, 10, 11 und 14 gelöst.

Es wird eine Transferfolie, umfassend eine Trägerfolie und eine von der Trägerlage ablösbare Transferlage, angegeben, wobei die Transferfolie zur Übertragung der Transferlage auf Bauteile, insbesondere auf dreidimensionale vorgesehen ist, und wobei vorgeschlagen wird, dass zwischen der Trägerfolie und der Transferlage eine Tiefziehmembran angeordnet ist.

Ferner wird eine Verwendung einer erfindungsgemäßen Transferfolie in einem IMD-Verfahren, bzw. in einem Insertmolding-Verfahren bzw. in einem TOM-Verfahren angegeben.

Des Weiteren wird ein Verfahren zur Herstellung einer Transferfolie, insbesondere einer erfindungsgemäßen Transferfolie, angegeben, aufweisend eine Trägerfolie, eine von der Trägerfolie ablösbare Transferlage und eine zwischen der Trägerfolie und der Transferlage angeordneten Tiefziehmembran, wobei die Tiefziehmembran mittels Gießverfahren oder mittels Siebdruck, Tiefdruck, Flexodruck oder Tintenstrahldruck bzw. Inkjetdruck hergestellt bzw. aufgebracht wird.

Zudem wird ein Verfahren zur Beschichtung eines Bauteils mittels einer erfindungsgemäßen Transferfolie angegeben.

Die Tiefziehmembran weist den Vorteil auf, dass sie in der Lage ist, Zugkräfte aufzunehmen und dadurch als Verformungshilfe für die Transferlage wirken kann. Sie schützt weiter die Transferlage bei der Verformung vor Rissen und anderen Beschädigungen. Unter einem dreidimensionalen Bauteil wird hier insbesondere ein Bauteil verstanden, das in drei Dimensionen verformt ist, also in einer Längen-, Breiten- und Höhenerstreckung, beispielsweise ein Gehäuse eines Gerätes.

Es kann vorgesehen sein, dass die Tiefziehmembran als eine Lackschicht mit einer Schichtdicke im Bereich von 10 µm bis 200 µm, vorzugsweise im Bereich von 20 µm bis 100 µm, weiter bevorzugt im Bereich von 25 µm bis 75 µm ausgebildet ist.

In einer vorteilhaften Ausbildung kann vorgesehen sein, dass die Tiefziehmembran aus Polyurethan ausgebildet ist. Das Polyurethan kann lösemittelbasiert oder eine wässrige Dispersion sein. Das Polyurethan muss ausreichend verformbar sein und kann aus verschiedenen Polymeren zusammengesetzt sein. Dazu gehören Polyurethane aus z.B. Polyesterpolyole, Polyetherpolyole, Polycarbonatpolyole, Polyacrylatpolyole und Kombinationen dieser Polymeren. Bevorzugt kann Polyurethan aus Polyesterpolyolen eingesetzt werden. Diese Polymere bilden die Grundlage für Lackformulierungen, aus denen die Tiefziehmembran hergestellt wird.

Um eine ausreichende Schichtstärke zu erreichen, können diese Schichten vorzugsweise im Gießverfahren, beispielsweise mittels Aufbringen mit einer Schlitzdüse, oder auch mittels Siebdruck, Tiefdruck, Flexodruck oder Tintenstrahldruck bzw. Inkjetdruck hergestellt sein. Die genannten Herstellungsverfahren können in einem oder in mehreren aufeinander folgenden Durchgängen angewandt werden. Ferner ist auch eine Kombination der einzelnen Verfahren grundsätzlich möglich.

Bevorzugt ist zwischen den aufeinander folgenden Durchgängen die zuerst aufgebrachte Schicht, insbesondere Lackschicht zumindest teilweise getrocknet, sodass die Schicht zumindest oberflächentrocken ist. Es kann insbesondere jedoch auch eine Durchtrocknung der Schicht erfolgen. Nach dieser Trocknung erfolgt das Auftragen einer folgenden Schicht, wobei die folgende Schicht die zuvor aufgetragene Schicht bevorzugt zumindest oberflächlich so anlöst, dass beide Schichten gemeinsam eine homogene Gesamt-Schicht bilden. Bei mehr als zwei aufeinanderfolgenden Schichten, insbesondere Lackschichten wird bevorzugt entsprechend mehrmals so vorgegangen, damit alle aufeinanderfolgenden Schichten gemeinsam eine homogene Gesamt-Schicht bilden.

In einer bevorzugten Ausführung wird in einem Durchgang eine Schicht, insbesondere eine Lackschicht mit einer Schichtdicke im Bereich von etwa 0,1 µm bis 50 µm, vorzugsweise im Bereich von 0,1 µm bis 35 µm, weiter bevorzugt im Bereich von 1 µm bis 25 µm aufgebracht. Mittels solcher vergleichsweise dünner Teil-Schichten lassen sich wie oben beschrieben dann Gesamt-Schichten mit größeren Schichtdicken aufbauen.

Die Tiefziehmembran kann transparent, transluzent oder opak ausgebildet sein und dabei farblos oder farbig sein. Eine zumindest teilweise Opazität und/oder Farbigkeit erleichtert die Erkennbarkeit des Vorhandenseins der Tiefziehmembran auf dem dekorierten Substrat oder Bauteil. Insbesondere wenn die Tiefziehmembran noch längere Zeit auf dem Substrat oder Bauteil als zusätzliche Schutzschicht verbleibt, kann eine solche optische Erkennbarkeit hilfreich sein. Diese Schutzschicht kann beispielsweise so lange auf dem Substrat oder Bauteil verbleiben, bis es endgültig verbaut ist und/oder zu einem Bestimmungsort transportiert wurde und die Funktion als Schutzschicht gegen Beschädigungen erfüllt hat.

Dabei ist es vorteilhaft, wenn die Tiefziehmembran ein Dekor, z.B. ein Muster oder ein Motiv, beispielsweise ein Logo oder einen Schriftzug aufweist. Der Schriftzug kann beispielsweise eine Herstellerangabe oder auch eine Benutzungsanweisung für die Tiefziehmembran und/oder für das Substrat oder Bauteil enthalten.

Das Dekor oder Motiv kann insbesondere auf die Tiefziehmembran aufgedruckt sein. Beispielsweise ist es möglich, in einem ersten Gießvorgang die Tiefziehmembran zu gießen, danach das Dekor oder Motiv zu drucken und anschließend in einem zweiten Gießvorgang das Dekor oder Motiv in der Tiefziehmembran einzubetten. Das Dekor oder Motiv kann aus demselben Material bestehen wie die Tiefziehmembran oder auch aus anderen Materialien, beispielsweise aus PVC oder einem anderen Polyurethan als die Tiefziehmembran.

Die Tiefziehmembran kann vollflächig, also auf der gesamten Fläche der Transferfolie vorgesehen sein, oder alternativ dazu nur bereichsweise vorgesehen sein. Es ist beispielsweise möglich, die Tiefziehmembran nur in den Flächenbereichen vorzusehen, in denen besonders starke Verformungen bei der Verarbeitung der Transferfolie auftreten und beispielsweise in Flächenbereichen nicht vorzusehen, in denen nur geringe oder gar keine Verformungen bei der Verarbeitung der Transferfolie auftreten. Es ist beispielsweise auch möglich, die Tiefziehmembran nur in einem insbesondere schmalen Randbereich der Transferfolie nicht vorzusehen, um die Tiefziehmembran an diesem nun optisch erkennbaren und taktil zugänglichen Rand leichter abziehen zu können. Dafür kann die Tiefziehmembran an ihrem Rand auch eine Handhabungshilfe zum leichteren Abziehen, beispielsweise zumindest eine Lasche oder ähnliches aufweisen.

Es ist vorgesehen, dass die Tiefziehmembran bei einer Tiefziehtemperatur im Bereich von 130°C bis 160°C um 200 %, bevorzugt um 500 % bis über 1500 %, verdehnbar ausgebildet ist. Die Werte wurden in genormten Zugversuchen (DIN 53504, ISO 37) mit dem Prüfgerät Zwick Z005 der Firma Zwick GmbH & Co. KG, Ulm ermittelt.

Es kann vorgesehen sein, dass zwischen der Trägerfolie und der Tiefziehmembran eine erste Ablöseschicht angeordnet ist und dass zwischen der Tiefziehmembran und der Transferlage eine zweite Ablöseschicht angeordnet ist.

Es kann weiter vorgesehen sein, dass die erste und/oder die zweite Ablöseschicht aus einem Wachs bestehen bzw. besteht. Dies kann z.B. ein Carnaubawachs, Montansäureester, Polyethylenwachs, Polyamidwachs oder ein PTFE-Wachs (PTFE = Polytetrafluorethylen) sein. Des Weiteren sind oberflächenaktive Substanzen wie Silikone als Ablöseschicht geeignet. Auch dünne Schichten aus Melaminformaldehydharz-vernetzten Lacken können als Ablöseschicht dienen.

In einer vorteilhaften Ausbildung kann vorgesehen sein, dass die erste und/oder die zweite Ablöseschicht eine Schichtdicke kleiner als 1 µm, insbesondere kleiner als 0,1 µm aufweisen bzw. aufweist.

Vorteilhafterweise kann vorgesehen sein, dass die Ablösekraft der Trägerfolie von der Tiefziehmembran aufgrund der zwischen Trägerfolie und Tiefziehmembran angeordneten ersten Ablöseschicht um den Faktor 5 bis 10 kleiner ist als die Ablösekraft der Tiefziehmembran von der Transferlage aufgrund der zwischen Tiefziehmembran und der Transferlage angeordneten zweiten Ablöseschicht. Die Ablösewerte wurden mithilfe einer Zugversuch-Prüfmaschine (Zwick Z005 der Firma Zwick GmbH & Co. KG, Ulm) ermittelt. Hierzu wurde die Transferfolie flach auf die untere Halterung geklebt. Die abzulösende Schicht wurde dann im rechten Winkel durch den Zugversuch abgelöst. Über die Kraftmessdose wurden die Ablösekräfte ermittelt.

Die Transferlage kann als ein aus mehreren Transferschichten ausgebildeter Mehrschichtkörper ausgebildet sein.

Es kann vorgesehen sein, dass die Ablösekraft der Tiefziehmembran von der Transferlage aufgrund der zwischen Tiefziehmembran und der Transferlage angeordneten zweiten Ablöseschicht um 30 % bis 70 % kleiner ist als die Haftkraft der benachbarten Transferschichten zueinander.

Die Transferlage kann eine der Tiefziehmembran zugewandte erste Transferschicht, eine zweite Transferschicht und eine dritte Transferschicht umfassen. Auf die erste und/oder dritte Transferschicht kann auch verzichtet werden.

Die erste Transferschicht kann als eine Schutzschicht ausgebildet sein.

Die Schutzschicht kann als ein Schutzlack aus einem PMMA-basierenden Lack mit bevorzugt einer Schichtdicke im Bereich von 2 µm bis 5 µm ausgebildet sein. Der Schutzlack kann auch aus einem strahlenhärtenden Dual Cure Lack bestehen. Dieser Dual Cure Lack kann in einem ersten Schritt beim und/oder nach dem Aufbringen in flüssiger Form thermisch vorvernetzt werden und in einem zweiten Schritt nach der Verarbeitung der Transferfolie insbesondere über energiereiche Strahlung, vorzugsweise UV-Strahlung radikalisch nachvernetzt werden. Dual Cure Lacke dieser Art können aus verschiedenen Polymeren oder Oligomeren bestehen, die ungesättigte Acrylat-, oder Methacrylat-Gruppen besitzen. Diese funktionellen Gruppen können in dem o.g. zweiten Schritt radikalisch miteinander vernetzt werden. Zur thermischen Vorvernetzung im ersten Schritt müssen bei diesen Polymeren oder Oligomeren auch mindestens zwei oder mehrere Alkoholgruppen vorhanden sein. Diese Alkoholgruppen können mit multifunktionellen Isocyanaten oder Melaminformaldehydharzen vernetzt werden. Als ungesättigte Oligomere oder Polymere kommen verschiedene UV-Rohstoffe wie Epoxyacrylate, Polyetheracrylate, Polyesteracrylate und insbesondere Acrylatacrylate in Frage. Als Isocyanat kommen sowohl geblockte als auch ungeblockte Vertreter auf TDI (TDI = Toluol-2,4-diisocyanat), HDI (HDI = Hexamethylendiisocyanat) oder IPDI-Basis (IPDI = Isophorondiisocyanat) in Frage. Die Melaminvernetzer können vollveretherte Versionen sein, können Imino-Typen sein oder Benzoguanamin-Vertreter darstellen. Viele dieser Schutzlacke wären ohne Tiefziehmembran nicht ausreichend verformbar und damit nicht ausreichend tiefziehfähig.

Es kann auch vorgesehen sein, dass die Schutzschicht als ein Schutzlack aus einem auf PMMA (PMMA = Polymethylmethacrylat) basierenden Lack oder einem Lack basierend auf einer Mischung aus PVDF (PVDF = Polyvinylidenfluorid) und PMMA, mit bevorzugt einer Schichtdicke im Bereich von 2 µm bis 50 µm, bevorzugt im Bereich von 5 µm bis 30 µm ausgebildet ist. Diese Lacke bringen die für eine Transferfolie und deren ausreichend genaue und saubere Ausprägbarkeit bzw. Trennbarkeit an den gewünschten Außengrenzen der übertragenen Flächenbereiche der Transferlagen notwendige mechanische Sprödigkeit mit.

Die zweite Transferschicht kann als eine ein- oder mehrschichtige Dekorschicht ausgebildet sein. Diese Dekorschicht umfasst vorzugsweise eine oder mehrere Schichten. Die Dekorschicht kann vorzugsweise eine oder mehrere Farbschichten, insbesondere Farblackschichten aufweisen. Diese Farbschichten können unterschiedlich eingefärbt sein, transparent und/oder opak ausgebildet sein und auch durch eine oder mehrere weitere Schichten, insbesondere transparente Schichten, getrennt sein. Die Farbschichten können hierbei aus einem Bindemittel und Farbmittel und/oder Pigmenten, insbesondere auch optisch variablen Pigmenten und/oder metallischen Pigmenten bestehen. Weiter kann die Dekorschicht auch eine oder mehrere Reflexionsschichten umfassen, die vorzugsweise opak, transluzent und/oder partiell ausgebildet sind. Insbesondere können die Reflexionsschichten aus Metallen und/oder HRI-Schichten (HRI = High Refraktive Index), also Schichten mit hohem Brechungsindex, insbesondere höher als 1,5 bestehen. Als Metalle kommen beispielsweise Aluminium, Chrom oder Kupfer oder Legierungen daraus in Frage. Als HRI-Schichten kommen beispielsweise ZnS oder SiO₂ in Frage. Weiter kann die Dekorschicht auch eine oder mehrere optisch aktive Reliefstrukturen, insbesondere diffraktive Strukturen und/oder Hologramme und/oder refraktive Strukturen und/oder Mattstrukturen aufweisen. Dabei ist zumindest eine Reflexionsschicht direkt auf der Reliefstruktur zumindest bereichsweise angeordnet.

Vorzugsweise ist die zweite Transferschicht als Farbschicht ausgebildet.

Es kann vorgesehen sein, dass die Farbschicht aus einem auf PMMA basierenden Lack mit bevorzugt einer Schichtdicke im Bereich von 1 µm bis 10 µm ausgebildet ist.

Die dritte Transferschicht kann als eine Grundierung ausgebildet sein. Die Grundierung ist eine Kleberschicht und/oder Haftvermittlerschicht.

Es kann vorgesehen sein, dass die Grundierung mit einer Schichtdicke im Bereich von 1 µm bis 5 µm ausgebildet ist. Infrage kommende Rohstoffe für die Grundierung sind PMMA, PVC, Polyester, Polyurethane, chlorierte Polyolefine, Polypropylen, Epoxidharze oder Polyurethan-Polyole in Kombination mit inaktivierten Isocyanaten. Die Grundierungen können außerdem anorganische Füllstoffe enthalten. Bevorzugt ist die Grundierung aus PVC für die Anwendung der Transferfolie im Insertmolding und bevorzugt aus Polyurethan-Polyolen in Kombination mit inaktivierten Isocyanaten für die Anwendung der Transferfolie in einem TOM-Prozess.

Die Herstellung der Transferfolie kann insbesondere dadurch erfolgen, dass die Tiefziehmembran in mehreren aufeinanderfolgenden Durchgängen bzw. aus mehreren Schichten hergestellt wird. Hierdurch kann insbesondere eine ausreichende Schichtstärke erreicht werden. Die einzelnen Schichten der Tiefziehmembran können vorzugsweise im Gießverfahren, beispielsweise mittels Aufbringen mit einer Schlitzdüse, oder auch mittels Siebdruck, Tiefdruck, Flexodruck oder Tintenstrahldruck bzw. Inkjetdruck hergestellt werden.

Bevorzugt ist es, wenn zwischen den aufeinander folgenden Durchgängen die zuerst aufgebrachte Schicht zur Herstellung der Tiefziehmembran, insbesondere Lackschicht, zumindest teilweise getrocknet wird. Insbesondere wird die Schicht derart getrocknet, dass die Schicht zumindest oberflächentrocken ist. Es kann aber auch eine Durchtrocknung der Schicht erfolgen. Nach der Trocknung erfolgt dann bevorzugt das Auftragen einer folgenden Schicht. Bevorzugt wird die folgende Schicht so aufgebracht, dass sie die zuvor aufgetragene Schicht bevorzugt zumindest oberflächlich anlöst. Von Vorteil ist es, wenn die beiden Schichten durch das Anlösen gemeinsam eine homogene Gesamt-Schicht bilden.

Bei mehr als zwei aufeinanderfolgenden Schichten zur Herstellung der Tiefziehmembran wird entsprechend mehrmals so vorgegangen, damit alle aufeinanderfolgenden Schichten gemeinsam eine homogene Gesamt-Schicht bilden.

In einer bevorzugten Ausführung wird in einem Durchgang eine Schicht, insbesondere eine Lackschicht mit einer Schichtdicke im Bereich von etwa 0,1 µm bis 50 µm, vorzugsweise im Bereich von 0,1 µm bis 35 µm, weiter bevorzugt im Bereich von 1 µm bis 25 µm aufgebracht. Mittels solcher vergleichsweise dünner Teil-Schichten lassen sich wie oben beschrieben dann Gesamt-Schichten mit größeren Schichtdicken aufbauen.

Im Folgen werden Verfahren zur Beschichtung eines Bauteils mittels der vorbeschriebenen Transferfolie, insbesondere mit der Transferlage der vorbeschriebenen Transferfolie beschrieben.

Es kann vorgesehen sein, dass das Verfahren als IMD-Verfahren ausgebildet ist, wobei ein Einlegen der Transferfolie in ein Spritzgusswerkzeug und ein Hinterspritzen der Transferfolie mit einem Kunststoff erfolgt.

Nach dem Hinterspritzen wird bevorzugt die Trägerfolie der Transferfolie abgezogen. Zusammen mit der Transferfolie kann auch die Tiefziehmembran abgezogen werden. Von Vorteil ist es aber, wenn die Tiefziehmembran zumindest erst einmal auf der Transferlage verbleibt. Die Tiefziehmembran dient so insbesondere als Schutzschicht für die Transferlage. Hier kann insbesondere auf eine eigene Schutzschicht der Transferlage verzichtet werden. Denkbar ist auch, dass die Tiefziehmembran kurz vor dem Einsatz des beschichteten Bauteils oder erst bei Einsatz des Bauteils abgezogen wird. Hierdurch wird unter anderem verhindert, dass das Bauteil frühzeitig, noch vor dessen Einsatz irgendwelche Beschädigungen erfährt. Von Vorteil ist es hierbei, wenn die Transferlage eine eigene Schutzschicht aufweist, die die Transferlage bei Einsatz des Bauteils vor äußeren Einflüssen schützt.

Es kann vorgesehen sein, dass das Verfahren als Insertmolding-Verfahren ausgebildet ist, das ein Kaschieren eines Substrats, ein Tiefziehen des kaschierten Substrats und ein Hinterspritzen des tiefgezogenen Substrats mit einem thermoplastischen Kunststoff umfasst, wobei die Trägerfolie der Transferfolie nach dem Kaschieren des Substrats von dem Substrat abgezogen wird, und wobei die Tiefziehmembran nach dem Hinterspritzen von dem hinterspritzten Substrat abgezogen wird.

Im Folgenden werden Beispiele mit und ohne Tiefziehmembran geschildert, die den Vorteil der Tiefziehmembran verdeutlichen.

Wird eine bisher bekannte Transferfolie, die eigentlich für die Verarbeitung im IMD-Verfahren vorgesehen ist, in einem Tiefziehprozess verarbeitet, entstehen dabei meist optische Defekte. Dies ist darin begründet, dass eine IMD-Folie für hohe Beständigkeiten und vergleichsweise geringe Verformungen vorgesehen ist. Aufgrund der vergleichsweise geringen Verformungen kann insbesondere die Schutzschicht einer IMD-Folie besonders hart sein, was ihre Verformbarkeit verringert. Diese hohen Beständigkeiten sind allerdings auch für Bauteile gewünscht, die in einem Tiefziehprozess verarbeitet werden, was dann aber mit größeren Verformungen der Transferfolie einhergeht.

Eine solche bekannte Transferfolie kann wie folgt aufgebaut sein:
Auf einen Trägerfilm, bevorzugt aus PET mit einer Schichtstärke von 36 µm bis 100 µm ist eine Ablöseschicht, die zum Beispiel aus einem Polyethylenwachs bestehen kann, aufgebracht. Auf dieser Ablöseschicht ist eine Schutzschicht mit einer Schichtstärke von 3 µm bis 5 µm aufgetragen. Diese Schutzschicht ist ein PMMA-basierender Lack. Des Weiteren werden auf die Schutzschicht Farblacke aufgetragen, die ebenfalls PMMA-basierend sind und in unterschiedlichen Schichtstärken zwischen 2 µm bis 15 µm appliziert werden. Die Farblacke können unterschiedliche Pigmente enthalten und vollflächig oder im Dekor gedruckt sein. Als letztes enthält diese Transferfolie eine geeignete Grundierung, die für das jeweils vorgesehene Substrat ausreichend Haftung generiert. Diese Grundierung kann im vorliegenden Fall aus einem PVC-Vinylacetat-Copolymer bestehen, mit einer Schichtdicke von 1 µm. Diese Folie wird zur Verarbeitung als Insert auf ein Substrat kaschiert. Das Substrat kann aus einem Acrylnitril-Butadien-Styrol-Copolymerisat bestehen, dessen Stärke zwischen 200 µm bis 750 µm liegt. Die Kaschierbedingungen liegen bei 120°C bis 300°C, bevorzugt bei 180°C bis 220°C mit einem Liniendruck von 0,1 kN/cm bis 1,0 kN/cm, bevorzugt bei 0,3 kN/cm bis 0,4 kN/cm. Bei diesem Kaschierprozess wird die Trägerfolie abgelöst, so dass die oberste verbleibende Schicht jetzt von der Schutzschicht gebildet wird. Dieses kaschierte Substrat kann nachfolgend in einem Vakuumtiefziehprozess verarbeitet werden. Die kaschierte Ware wird dabei auf ca. 140°C bis 160°C aufgeheizt und mit Hilfe von Unterdruck/Vakuum über eine Werkzeuggeometrie gezogen.

Handelt es sich bei der tiefgezogenen Folie um eine (eigentlich) für das IMD-Verfahren ausgelegte Transferfolie (wie oben beschrieben), entstehen folgende Schadensbilder: Die Folie kann in stärkeren Verdehnungsbereichen aufreißen, so dass ein Spalt durch das gesamte oder auch nur einem Teil des Lackpakets der Transferlage geht. Dies liegt vorwiegend daran, dass die IMD-Schutzlacke nicht genügend Zugkräfte aufnehmen können und somit beim Verdehnen aufplatzen. Des Weiteren wird die Oberflächenglätte (Glanz) der Schutzlackschicht abnehmen und die Stellen mit einem hohen Verdehnungsgrad (insbesondere dort, wo der Schutzlack stark ausgedünnt wird) werden insbesondere durch eine Vielzahl von Mikrorissen trüb bzw. milchig, so dass z.B. darunter liegende schwarze Dekore grau erscheinen. Dies liegt vor allem an der Tatsache, dass die Oberflächengüte des Schutzlacks nicht mehr von der Trägerfolie vorgegeben wird, da dieser bereits nach dem Kaschiervorgang entfernt wurde. Eine PET-Trägerfolie wäre für eine Inserttypische Verdehnung zu rigide.

Die vorliegende Erfindung löst dieses Problem durch die erfindungsgemäße Tiefziehmembran. Nimmt man wie oben erwähnt einen Trägerfilm aus PET, der bevorzugt eine Schichtstärke von etwa 36 µm bis 100 µm besitzt und eine erste Ablöseschicht aus einem Polyethylenwachs, so kann man auf diese erste Ablöseschicht die Tiefziehmembran aufbringen, die z.B. aus einem Polyurethan besteht. Diese Tiefziehmembran hat bevorzugt eine Schichtstärke von 10 µm bis 200 µm. Unterhalb der Tiefziehmembran kann eine zweite Ablöseschicht, insbesondere aus Montansäureester mit einer Stärke bevorzugt kleiner als 1 µm angeordnet sein, deren Ablösekraft sich von der ersten Ablöseschicht unterscheidet, insbesondere deren Ablösekraft ca. um den Faktor 5 bis 10 höher ist als die Ablösekraft der ersten Ablöseschicht. Der restliche Aufbau der Transferfolie besteht bevorzugt wie oben erwähnt aus einem PMMA-basierenden Schutzlack, dessen Schichtstärke bevorzugt im Bereich von 2 µm bis 5 µm liegt. Die folgenden farbgebenden Dekorschichten sind insbesondere ebenfalls PMMA-basierend und liegen bevorzugt im Bereich von 2 µm bis 15 µm. In diesem modifizierten Aufbau wird insbesondere die gleiche PVC-Vinylacetat-Grundierung benutzt wie im vorhergehenden Beispiel.

Kaschiert man diesen erweiterten Folienaufbau auf ein ABS-Substrat (Dicke 200 µm bis 750 µm), so kann danach die Trägerfolie entfernt werden. Jetzt bildet die lackierte Tiefziehmembran die oberste Schicht des Substrats (Insertmaterial). Wird die kaschierte Ware jetzt bei 140°C bis 160°C tiefgezogen, nimmt diese oberste Tiefziehmembran die Zugkräfte der Verdehnungen auf und definiert gleichzeitig die Oberflächenqualität der darunterliegenden Schutzschicht.

Nach dem Vakuumformen kann jetzt die Tiefziehmembran von der Schutzschicht abgezogen werden. Das geformte Bauteil hat so keine Möglichkeit zu reißen und die Oberfläche des Schutzlacks bleibt glänzend und somit transparent. Obwohl alle Lacke, die auf das Bauteil appliziert wurden, in beiden Beispielen gleich sind, ist nur in der erfindungsgemäßen Methode ein optisch einwandfreies Bauteil generiert worden.

Es kann auch vorgesehen sein, dass das Verfahren als ein TOM-Verfahren ausgebildet ist, das ein Kaschieren eines Substrats, ein Beschichten der Rückseite des Substrats mit einer TOM-Grundierung und das Aufbringen des kaschierten und grundierten Substrats auf ein dreidimensionales Bauteil umfasst, wobei die Trägerfolie der Transferfolie vor oder nach dem Beschichten des Substrats abgezogen wird, und wobei die Tiefziehmembran nach dem Aufbringen des kaschierten und grundierten Substrats auf das Bauteil von der Transferlage abgezogen wird.

Ziel war es, eine Transferfolie für das TOM-Verfahren herzustellen. Eine solche Transferfolie war bisher unbekannt, vor allem weil es bis heute an ausreichend thermoformbaren Trägerfolien fehlt, die gleichzeitig den Bedingungen der Herstellung einer Transferfolie standhalten. Als Trägerfolien-Material wurde PET gewählt, welches als erste Ablöseschicht insbesondere mit einem Polyethylenwachs der Schichtdicke bevorzugt kleiner als 1 µm beschichtet wurde. Hierauf wurde als Tiefziehmembran insbesondere eine Polyurethan-Polyesterpolyol-Schicht der Stärke 30 µm aufgebracht. Hierauf wurde als zweite Ablöseschicht eine Montansäureesterschicht der Stärke insbesondere kleiner als 1 µm aufgebracht. Die Ablösekraft der zweiten Ablöseschicht unterscheidet sich von der ersten Ablöseschicht, insbesondere ist deren Ablösekraft ca. um den Faktor 5 bis 10 höher ist als die Ablösekraft der ersten Ablöseschicht. Auf diese zweite Ablöseschicht wurde als erste Schicht der Transferlage eine Dekorschicht bestehend aus einem Gemisch von PMMA/PVDF mit einer Schichtstärke von 30 µm aufgebracht. Auf diese wurde als zweite Schicht der Transferlage das Farblackpacket basierend auf PMMA-Lacken mit einer Gesamtstärke von 8 µm aufgebracht. Auf dieses wurde die Grundierung bestehend aus einer 8 µm starken Schicht basierend auf einer Kombination aus Polyurethan-Polyolen mit einem inaktivierten Isocyanat aufgebracht. Vor der Verarbeitung im TOM-Verfahren auf einer Maschine des Herstellers Navitas, Japan wurde die Trägerfolie abgezogen. Die Verarbeitung bei 130°C lieferte eine gute Anfangshaftung auf dem Substrat, welches ein dreidimensional geformtes ABS/PC-Spritzgussteil war. Nach Lagerung der Spritzgussteile über mehrere Tage wurde die Tiefziehmembran abgezogen, wobei die Transferlage kantenscharf ausbrach.

Weiter kann vorgesehen sein, dass das Verfahren als ein TOM-Verfahren ausgebildet ist, das ein Aufbringen der Transferfolie auf ein dreidimensionales Bauteil umfasst, wobei die Trägerfolie vor dem Aufbringen der Transferfolie auf das Bauteil von der Tiefziehmembran abgezogen wird, und wobei die Tiefziehmembran nach dem Aufbringen der Transferfolie auf das Bauteil von der Transferlage abgezogen wird. Nach Abziehen der Trägerfolie ist die Transferfolie aufgrund der Tiefziehmembran noch immer selbsttragend und gut handhabbar. Die Tiefziehmembran übernimmt also die Funktion der Trägerfolie, ist aber erheblich besser verformbar als bekannte Trägerfolien. Das Applizieren der Transferfolie mit Tiefziehmembran auf das Bauteil erfolgt beispielsweise bei 100°C bis 180°C und mit einem Luft-Überdruck von 0,1 bar bis 2 bar.

Die Erfindung wird nun anhand von Ausführungsbeispielen näher erläutert. Es zeigen
- Fig. 1: ein erstes Ausführungsbeispiel der erfindungsgemäßen Transferfolie in einer schematischen Schnittdarstellung;
- Fig. 2: einen ersten Verfahrensschritt zur Herstellung eines Inserts unter Verwendung der Transferfolie in Fig. 1 in einer schematischen Schnittdarstellung;
- Fig. 3: einen zweiten Verfahrensschritt zur Herstellung eines Inserts unter Verwendung der Transferfolie in Fig. 1 in einer schematischen Schnittdarstellung;
- Fig. 4: einen Verfahrensschritt zur Ausbildung einer TOM-Laminierfolie unter Verwendung der Transferfolie in Fig. 1 in einer schematischen Schnittdarstellung;
- Fig. 5: das Beschichten eines Bauteils mit der TOM-Laminierfolie in Fig. 4 in einer schematischen Schnittdarstellung;
- Fig. 6: ein zweites Ausführungsbeispiel der erfindungsgemäßen Transferfolie in einer schematischen Schnittdarstellung;
- Fig. 7: einen ersten Verfahrensschritt eines TOM-Verfahrens zum Beschichten eines Bauteils mit der Transferfolie in Fig. 6 in einer schematischen Schnittdarstellung;
- Fig. 8: einen zweiten Verfahrensschritt eines TOM-Verfahrens zum Beschichten eines Bauteils mit der Transferfolie in Fig. 1 in einer schematischen Schnittdarstellung.

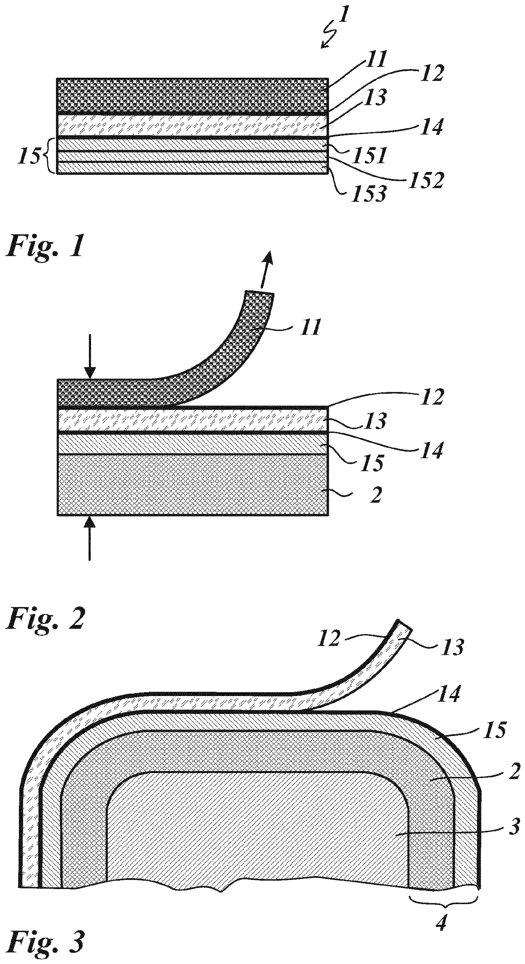

Die Fig. 1 zeigt eine Transferfolie 1, die eine Trägerfolie 11, eine erste Ablöseschicht 12, eine Tiefziehmembran 13, eine zweite Ablöseschicht 14 und eine Transferlage 15 mit mehreren Transferschichten 151, 152, 153 umfasst.

Die weiteren Angaben beschreiben das in Fig. 1 dargestellte Ausführungsbeispiel.

Die Trägerfolie 11 ist als eine PET-Folie mit einer Schichtdicke im Bereich von 12 bis 100 µm ausgebildet.

Die Tiefziehmembran 13 ist als eine Lackschicht aus Polyurethan mit einer Schichtdicke im Bereich von 10 µm bis 200 µm, vorzugsweise im Bereich von 20 µm bis 100 µm, weiter bevorzugt von 25 µm bis 75 µm ausgebildet. Das Polyurethan kann lösemittelbasiert oder eine wässrige Dispersion sein. Das Polyurethan muss ausreichend verformbar sein und kann aus verschiedenen Polymeren zusammengesetzt sein. Dazu gehören Polyurethane aus z.B. Polyesterpolyole, Polyetherpolyole, Polycarbonatpolyole, Polyacrylatpolyole und Kombinationen dieser Polymeren. Bevorzugt kann Polyurethan aus Polyesterpolyolen eingesetzt werden. Diese Polymere bilden die Grundlage für Lackformulierungen, aus denen die Tiefziehmembran 13 hergestellt wird.

Um eine ausreichende Schichtstärke zu erreichen, können diese Schichten vorzugsweise im Gießverfahren, beispielsweise mittels Aufbringen mit einer Schlitzdüse, oder auch mittels Siebdruck, Tiefdruck, Flexodruck oder Tintenstrahldruck bzw. Inkjetdruck hergestellt werden. Die genannten Herstellungsverfahren können in einem oder in mehreren aufeinander folgenden Durchgängen angewandt werden.

Bevorzugt wird zwischen den aufeinander folgenden Durchgängen die zuerst aufgebrachte Lackschicht zumindest teilweise getrocknet, sodass die Lackschicht zumindest oberflächentrocken ist. Es kann jedoch insbesondere auch eine Durchtrocknung der Lackschicht erfolgen. Nach dieser Trocknung erfolgt das Auftragen der folgenden Lackschicht, wobei die folgende Lackschicht die zuvor aufgetragene Lackschicht insbesondere zumindest oberflächlich so anlöst, dass beide Lackschichten gemeinsam eine homogene Gesamt-Lackschicht bilden. Bei mehr als zwei aufeinanderfolgenden Lackschichten wird entsprechend mehrmals so vorgegangen, damit alle aufeinanderfolgenden Lackschichten gemeinsam eine homogene Gesamt-Lackschicht bilden.

In einer bevorzugten Ausführung wird in einem Durchgang eine Lackschicht mit einer Schichtdicke im Bereich von 0,1 µm bis 50 µm, vorzugsweise im Bereich von 0,1 µm bis 35 µm, weiter bevorzugt im Bereich von 1 µm bis 25 µm aufgebracht. Mittels solcher vergleichsweise dünner Teil-Lackschichten lassen sich wie oben beschrieben dann Gesamt-Lackschichten mit größeren Schichtdicken aufbauen.

Die Tiefziehmembran 13 ist bei einer Tiefziehtemperatur im Bereich von 130°C bis 160°C um 200 %, bevorzugt um 500 % bis über 1500 % verdehnbar ausgebildet.

Die erste Ablöseschicht 12 ist zwischen der Trägerfolie 11 und der Tiefziehmembran 13 angeordnet, aus einem Wachs ausgebildet, welches z.B. Carnaubawachs, Montansäureester, Polyethylenwachs, Polyamidwachs oder PTFE-Wachs sein kann und weist eine Schichtdicke im Bereich von kleiner als 0,1 µm auf. Des Weiteren sind oberflächenaktive Substanzen wie Silikone als erste Ablöseschicht geeignet. Auch dünne Schichten aus Melaminformaldehydharz-vernetzten Lacken können als erste Ablöseschicht dienen.

Zwischen der Tiefziehmembran 13 und der Transferlage 15 ist eine zweite Ablöseschicht 14 angeordnet. Die zweite Ablöseschicht 14 ist wie die erste Ablöseschicht 12 aus einem Wachs ausgebildet, welches z.B. Carnaubawachs, Montansäureester, Polyethylenwachs, Polyamidwachs oder PTFE-Wachs sein kann und weist eine Schichtdicke im Bereich von kleiner als 0,1 µm auf. Des Weiteren sind oberflächenaktive Substanzen wie Silikone als zweite Ablöseschicht 14 geeignet. Auch dünne Schichten aus Melaminformaldehydharz-vernetzten Lacken können als zweite Ablöseschicht 14 dienen.

Die Ablösekraft der Trägerfolie 11 von der Tiefziehmembran 13 ist aufgrund der zwischen Trägerfolie 11 und Tiefziehmembran 13 angeordneten ersten Ablöseschicht 12 um den Faktor 5 bis 10 kleiner als die Ablösekraft der Tiefziehmembran 13 von der Transferlage 15 aufgrund der zwischen Tiefziehmembran 13 und der Transferlage 15 angeordneten zweiten Ablöseschicht 14. Die erste Ablöseschicht 12 kann dafür beispielsweise aus Polyethylenwachs sein und die zweite Ablöseschicht 14 kann dafür beispielsweise aus Montansäureester sein.

Die Transferlage 15 ist als ein Mehrschichtkörper ausgebildet, der drei Transferschichten 151 bis 153 aufweist.

Die erste Transferschicht 151 ist der zweiten Ablöseschicht zugewandt und als eine Schutzschicht ausgebildet. Die erste Transferschicht kann beispielsweise als ein Schutzlack aus Acrylat mit einer Schichtdicke von 4 µm bis 8 µm oder aus Polyurethan mit einer Schichtdicke von 15 µm bis 30 µm ausgebildet sein.

Die zweite Transferschicht 152 ist als eine Farbschicht aus Acrylat mit einer Schichtdicke von 4 µm bis 20 µm ausgebildet.

Die dritte Transferschicht 153 ist als eine Grundierung mit einer Schichtdicke von 1 µm bis 5 µm ausgebildet. Infrage kommende Rohstoffe für die Grundierung sind PMMA, PVC, Polyester, Polyurethane, chlorierte Polyolefine, Polypropylen oder Epoxidharze oder Polyurethan-Polyole in Kombination mit inaktivierten Isocyanaten. Die Grundierungen können außerdem anorganische Füllstoffe enthalten.

Die Ablösekraft der Tiefziehmembran 13 von der Transferlage 15 ist aufgrund der zwischen Tiefziehmembran 13 und der Transferlage 15 angeordneten zweiten Ablöseschicht 14 um etwa 30 % bis 70 % kleiner als die Haftkraft der benachbarten Transferschichten 151 bis 153 zueinander.

Die Fig. 2 und 3 zeigen Verfahrensschritte zur Herstellung eines Inserts unter Verwendung der in Fig. 1 beschriebenen Transferfolie 1.

Fig. 2 zeigt das Aufbringen der Transferfolie 1 unter Einwirkung von Temperatur und Druck (in Fig. 2 durch Richtungspfeile angedeutet) auf ein Substrat 2 sowie das Ablösen der Trägerfolie 11 nach dem Kaschieren des Substrats 2.

Das Substrat 2 kann beispielsweise als eine Folie aus ABS (Acrylnitril-Butadien-Styrol-Copolymerisat) mit einer Schichtdicke im Bereich von 100 µm bis 1000 µm ausgebildet sein.

Es hat sich bewährt, einen Liniendruck im Bereich von 0,1 kN/cm bis 1,0 kN/cm, bevorzugt im Bereich von 0,3 kN/cm bis 0,4 kN/cm bei einer Temperatur im Bereich von 120°C bis 300°C, bevorzugt im Bereich von 180°C bis 220°C aufzubringen, um die Transferfolie 1 mit dem Substrat zu verbinden.

Fig. 3 zeigt einen weiteren Verfahrensschritt, bei dem das mit der Transferfolie 1 kaschierte Substrat 2 über einem Werkzeug 3 bei einer Temperatur im Bereich von 130°C bis 160°C vakuumgeformt wird, wobei anschließend die Tiefziehmembran 13 von der Transferlage 15 entfernt wird. Beim Tiefziehen nimmt die Tiefziehmembran 13 die Zugkräfte der auftretenden Verdehnungen auf und definiert gleichzeitig die Oberflächenqualität der darunterliegenden Schutzschicht der Transferlage 15. Damit liegt ein fertig dekoriertes Insert 4 vor, das in Folgeschritten durch Ausstanzen beschnitten und mit einem thermoplastischen Kunststoff hinterspritzt wird.

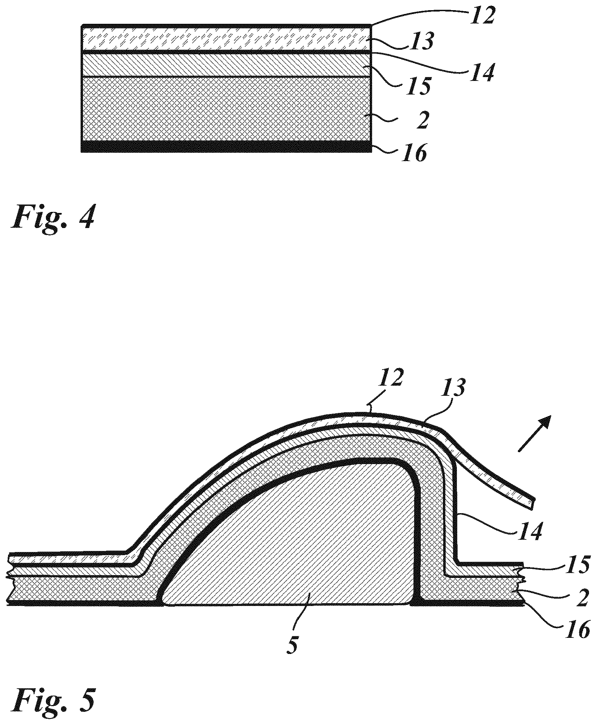

Die Fig. 4 und 5 zeigen Verfahrensschritte zum Beschichten eines Bauteils 5 mit einer TOM-Laminierfolie.

In einem ersten Verfahrensschritt wird die Transferfolie 1 auf ein ebenes, flaches Substrat 2 laminiert und nach dem Laminieren wird die Trägerfolie 11 entfernt, wie weiter oben in Fig. 2 beschrieben.

Sodann wird zur Ausbildung einer TOM-Laminierfolie auf die Rückseite des Substrats 2 eine TOM-Grundierung mit Schichtdicken von 5 µm bis 20 µm aufgebracht, wie in Fig. 4 dargestellt. Solche Grundierungen für das TOM-Verfahren bestehen üblicherweise aus Polypropylen, aus einer Kombination aus Polyurethan-Polyolen mit inaktivierten Isocyanaten, Polyurethanen oder Epoxidharzen. Bei Verwendung von Epoxidharzen ist es vorteilhaft, zusätzlich zu der Grundierung auf das Bauteil eine geeignete Sprühgrundierung aufzubringen. Diese Sprühgrundierungen enthalten typischerweise verschiedene aminogruppenhaltige Rohstoffe. Die anderen Typen sind hitzeaktiviert.

In Fig. 5 ist ein weiterer Verfahrensschritt dargestellt, bei dem im TOM-Verfahren ein dreidimensionales Bauteil 5 mit der in Fig. 4 beschriebenen TOM-Laminierfolie beschichtet wird und anschließend die Tiefziehmembran 13 entfernt wird.

In einem weiteren Verfahrensschritt wird die Beschichtung des Bauteils 5 durch Ausstanzen, Fräsen oder Lasertrimming beschnitten.

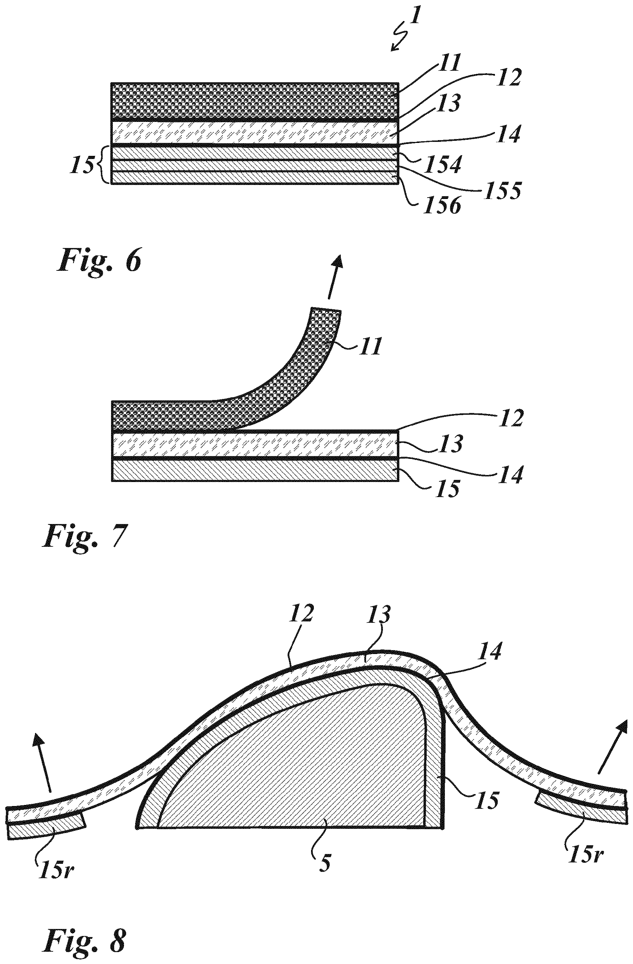

Fig. 6 zeigt ein zweites Ausführungsbeispiel der Transferfolie. Eine Transferfolie 1 ist wie die in Fig. 1 beschriebene Transferfolie ausgebildet, mit dem Unterschied, dass die dritte Transferschicht 153 als TOM-Grundierung ausgebildet ist. Die TOM-Grundierung weist eine vergleichsweise hohe Schichtdicke auf und ist bevorzugt als Kombination aus Polyurethan-Polyolen mit inaktivierten Isocyanaten ausgebildet. Die TOM-Grundierung ist schon bei den niedrigen Prozesstemperaturen von etwa 100°C bis 180°C und den niedrigen Prozessdrücken von 0,1 bar bis 2 bar aktivierbar und kann aufgrund der durch die Aktivierung erfolgenden Vernetzungsreaktion eine höhere Temperaturbeständigkeit am fertigen Bauteil aufweisen. Die Transferfolie 1 wird im TOM-Verfahren verwendet. Im Falle der Transferfolie entfällt der Beschnitt durch Ausstanzen, Fräsen oder Lasertrimming.

Fig. 7 zeigt einen ersten Verfahrensschritt, bei dem die Trägerschicht 11 von der Transferfolie 1 abgezogen wird.

Fig. 8 zeigt einen zweiten Verfahrensschritt, bei dem ein Bauteil 5 im TOM-Verfahren mit dem in Fig. 7 beschriebenen Schichtverbund beschichtet wird.

Die Tiefziehmembran 13 wird nach dem Beschichten des Bauteils 5 abgezogen, wobei auch auf der Tiefziehmembran 13 verbliebene Reste 15r der Transferlage 15 entfernt werden. Die Transferlage 15 weist dabei die nötige mechanische Sprödigkeit auf, damit am Rand des Bauteils 5 eine saubere Trennung der Transferlage 15 zwischen deren auf dem Bauteil 5 applizierten Teilen und der Reste 15r erfolgen kann. Abschließend wird die Transferlage 15 randbündig zu dem Bauteil 5 beschnitten.

### Bezugszeichenliste

- 1: Transferfolie
- 2: Substrat
- 3: Werkzeug
- 4: Insert
- 5: Bauteil
- 11: Trägerfolie
- 12: erste Ablöseschicht
- 13: Tiefziehmembran
- 14: zweite Ablöseschicht
- 15: Transferlage
- 15r: Restabschnitt der Transferlage
- 16: TOM-Grundierung
- 151: erste Transferschicht
- 152: zweite Transferschicht
- 153: dritte Transferschicht

## Patentansprüche

1. Transferfolie (1), umfassend eine Trägerfolie (11) und eine von der Trägerfolie ablösbare Transferlage (15), wobei die Transferfolie (11) zur Übertragung der Transferlage (15) auf ein Bauteil (5), insbesondere auf ein dreidimensionales Bauteil (5), vorgesehen ist,
**dadurch gekennzeichnet,**
**dass** zwischen der Trägerfolie (11) und der Transferlage (15) eine Tiefziehmembran (13) angeordnet ist und dass die Tiefziehmembran (13) bei einer Tiefziehtemperatur im Bereich von 130°C bis 160°C um 200 % verdehnbar ausgebildet ist.

2. Transferfolie (1) nach Anspruch 1,
**dadurch gekennzeichnet,**
**dass** die Tiefziehmembran (13) als eine Lackschicht mit einer Schichtdicke im Bereich von 10 µm bis 200 µm, vorzugsweise im Bereich von 20 µm bis 100 µm, weiter bevorzugt im Bereich von 25 µm bis 75 µm ausgebildet ist und/oder dass die Tiefziehmembran (13) aus Polyurethan ausgebildet ist und/oder dass die Tiefziehmembran (13) transparent, transluzent oder opak ausgebildet ist und/oder dass die Tiefziehmembran (13) ein Dekor oder ein Motiv aufweist und/oder dass die Tiefziehmembran (13) nicht vollflächig ausgebildet ist, insbesondere wobei die Tiefziehmembran (13) in einem Randbereich der Transferfolie (1) nicht ausgebildet ist, und/oder dass die Tiefziehmembran (13) in ihrem Randbereich eine Handhabungshilfe zum Abziehen der Tiefziehmembran (13) aufweist.

3. Transferfolie (1) nach einem der vorangehenden Ansprüche,
**dadurch gekennzeichnet,**
**dass** die Tiefziehmembran (13) bei einer Tiefziehtemperatur im Bereich von 130°C bis 160°C um 500 % bis über 1500 % verdehnbar ausgebildet ist und/oder dass die Tiefziehmembran (13) als gedruckte Schicht ausgebildet ist und/oder dass die Tiefziehmembran (13) aus mehreren Schichten ausgebildet ist und/oder dass die Tiefziehmembran (13) als eine homogene Gesamtschicht ausgebildet ist.

4. Transferfolie (1) nach einem der vorangehenden Ansprüche,
**dadurch gekennzeichnet,**
**dass** die Transferlage (15) als ein aus Transferschichten (151 bis 153) ausgebildeter Mehrschichtkörper ausgebildet ist und/oder dass die Transferlage (15) eine der Tiefziehmembran (13) zugewandte erste Transferschicht (151), eine zweite Transferschicht (152) und eine dritte Transferschicht (153) umfasst, insbesondere wobei die erste Transferschicht (151) als eine Schutzschicht ausgebildet ist, vorzugsweise wobei die Schutzschicht als ein Schutzlack aus einem PMMA-basierenden Lack mit einer Schichtdicke im Bereich von 2 µm bis 50 µm, bevorzugt im Bereich von 2 µm bis 30 µm ausgebildet ist und/oder dass die Schutzschicht als ein Schutzlack aus einem auf PMMA (PMMA = Polymethylmethacrylat) basierenden Lack oder einem Lack basierend auf einer Mischung aus PVDF (PVDF = Polyvinylidenfluorid) und PMMA, mit einer Schichtdicke im Bereich von 2 µm bis 50 µm, bevorzugt im Bereich von 5 µm bis 30 µm ausgebildet ist.

5. Transferfolie (1) nach Anspruch 4,
**dadurch gekennzeichnet,**
**dass** die zweite Transferschicht (152) als eine ein- oder mehrschichtige Dekorschicht ausgebildet ist, insbesondere wobei die zweite Transferschicht (152) als eine Farbschicht ausgebildet ist, bevorzugt wobei die Farbschicht aus einem auf PMMA basierenden Lack mit einer Schichtdicke im Bereich von 1 µm bis 10 µm ausgebildet ist.

6. Transferfolie (1) nach einem der Ansprüche 4 bis 5,
**dadurch gekennzeichnet,**
**dass** die dritte Transferschicht (153) als eine Grundierung ausgebildet ist, insbesondere wobei die Grundierung mit einer Schichtdicke im Bereich von 1 bis 5 µm ausgebildet ist.

7. Transferfolie (1) nach einem der vorangehenden Ansprüche,
**dadurch gekennzeichnet,**
**dass** zwischen der Trägerfolie (11) und der Tiefziehmembran (13) eine erste Ablöseschicht (12) angeordnet ist und dass zwischen der Tiefziehmembran (13) und der Transferlage (15) eine zweite Ablöseschicht (14) angeordnet ist, insbesondere wobei die erste Ablöseschicht (12) und/oder die zweite Ablöseschicht (14) aus einem Wachs bestehen bzw. besteht und/oder aus Montansäureester oder Polyethylen ausgebildet sind bzw. ist und/oder eine Schichtdicke kleiner als 1 µm, insbesondere kleiner als 0,1 µm aufweisen bzw. aufweist.

8. Transferfolie (1) nach Anspruch 7,
**dadurch gekennzeichnet,**
**dass** die Ablösekraft der Trägerfolie (11) von der Tiefziehmembran (13) aufgrund der zwischen Trägerfolie (11) und Tiefziehmembran (13) angeordneten ersten Ablöseschicht (12) um den Faktor 5 bis 10 kleiner ist als die Ablösekraft der Tiefziehmembran (13) von der Transferlage (15) aufgrund der zwischen Tiefziehmembran (13) und der Transferlage (15) angeordneten zweiten Ablöseschicht (14), insbesondere wobei die erste Ablöseschicht (12) aus Polyethylenwachs ausgebildet ist und die zweite Ablöseschicht (14) aus Montansäureester ausgebildet ist.

9. Transferfolie nach einem der Ansprüche 7 bis 8,
**dadurch gekennzeichnet,**
**dass** die Ablösekraft der Tiefziehmembran (13) aufgrund der zwischen Tiefziehmembran (13) und der Transferlage (15) angeordneten zweiten Ablöseschicht um 30 bis 70 % kleiner ist als die Haftkraft zweier benachbarter Transferschichten (151 bis 153).

10. Verwendung einer Transferfolie (1) nach einem der Ansprüche 1 bis 9 in einem IMD-Verfahren und/oder in einem Insertmolding-Verfahren und/oder in einem TOM-Verfahren.

11. Verfahren zur Herstellung einer Transferfolie (1), insbesondere einer Transferfolie nach einem der Ansprüche 1 bis 9, aufweisend eine Trägerfolie (11), eine von der Trägerfolie ablösbare Transferlage (15) und eine zwischen der Trägerfolie (11) und der Transferlage (15) angeordneten Tiefziehmembran (13),
**dadurch gekennzeichnet,**
**dass** die Tiefziehmembran (13) mittels Gießverfahren oder mittels Siebdruck, Tiefdruck, Flexodruck oder Tintenstrahldruck bzw. Inkjetdruck hergestellt bzw. aufgebracht wird und dass die Tiefziehmembran (13) bei einer Tiefziehtemperatur im Bereich von 130°C bis 160°C um 200 % verdehnbar ausgebildet ist.

12. Verfahren nach Anspruch 11,
**dadurch gekennzeichnet,**
**dass** die Tiefziehmembran (13) in mehreren aufeinanderfolgenden Durchgängen bzw. aus mehreren Schichten hergestellt wird, insbesondere wobei eine aufgebrachte Schicht zur Ausbildung der Tiefziehmembran (13) zumindest teilweise angetrocknet, insbesondere oberflächengetrocknet wird, bevor darauf eine weitere Schicht zur Ausbildung der Tiefziehmembran (13) aufgebracht wird und/oder komplett bzw. durchtrocknet wird, bevor darauf eine weitere Schicht zur Ausbildung der Tiefziehmembran (13) aufgebracht wird.

13. Verfahren nach Anspruch 11 oder 12,
**dadurch gekennzeichnet,**
**dass** eine folgende Schicht zur Ausbildung der Tiefziehmembran (13) derart aufgebracht wird, dass sie die zuvor aufgebrachte Schicht zumindest oberflächlich anlöst, so dass bevorzugt eine homogene Gesamtschicht ausgebildet wird.

14. Verfahren zur Beschichtung eines Bauteils (5) mittels einer Transferfolie (1) nach einem der Ansprüche 1 bis 9, insbesondere mit einer Transferlage (15) einer Transferfolie (1) nach einem der Ansprüche 1 bis 9.

15. Verfahren nach Anspruch 14,
**dadurch gekennzeichnet,**
**dass** das Verfahren als IMD-Verfahren ausgebildet ist, das ein Einlegen der Transferfolie (1) in ein Spritzgusswerkzeug und ein Hinterspritzen der Transferfolie (1) mit einem Kunststoff umfasst,
wobei die Trägerfolie (11) der Transferfolie (1) nach dem Hinterspritzen abgezogen wird und wobei die Tiefziehmembran (13) zusammen mit der Trägerfolie (13) oder zu einem späteren Zeitpunkt, insbesondere kurz vor oder erst bei Einsatz des Bauteils abgezogen wird und/oder dass das Verfahren als Insertmolding-Verfahren ausgebildet ist, das ein Kaschieren eines Substrats (2), ein Tiefziehen des kaschierten Substrats (2) und ein Hinterspritzen des tiefgezogenen Substrats (2) mit einem thermoplastischen Kunststoff umfasst,
wobei die Trägerfolie (11) der Transferfolie (1) nach dem Kaschieren des Substrats (2) von dem Substrat (2) abgezogen wird, und
wobei die Tiefziehmembran (13) nach dem Hinterspritzen von dem hinterspritzten Substrat (2) abgezogen wird und/oder dass das Verfahren als ein TOM-Verfahren ausgebildet ist, das ein Kaschieren eines Substrats (2), ein Beschichten der Rückseite des Substrats (2) mit einer TOM-Grundierung (16) und das Aufbringen des kaschierten und grundierten Substrats (2) auf ein dreidimensionales Bauteil (5) umfasst,
wobei die Trägerfolie (11) der Transferfolie (1) vor oder nach dem Beschichten des Substrats (2) abgezogen wird,
und wobei die Tiefziehmembran (13) nach dem Aufbringen des kaschierten und grundierten Substrats (2) auf das Bauteil (5) von der Transferlage (15) abgezogen wird und/oder dass das Verfahren als ein TOM-Verfahren ausgebildet ist, das ein Aufbringen der Transferfolie (1) auf ein dreidimensionales Bauteil (5) umfasst,
wobei die Trägerfolie (11) vor dem Aufbringen der Transferfolie (1) auf das Bauteil (5) von der Tiefziehmembran (13) abgezogen wird, und
wobei die Tiefziehmembran (13) nach dem Aufbringen der Transferfolie (1) auf das Bauteil (5) von der Transferlage (15) abgezogen wird.

## Claims

1. Transfer film (1), comprising a carrier film (11) and a transfer ply (15) which can be detached from the carrier film, wherein the transfer film (11) is provided to transfer the transfer ply (15) to a component (5), in particular to a three-dimensional component (5),
**characterised in that**
a deep-drawing membrane (13) is arranged between the carrier film (11) and the transfer ply (15), and the deep-drawing membrane (13) is formed to be stretchable by 200% at a deep-drawing temperature in the range of from 130°C to 160°C.

2. Transfer film (1) according to claim 1,
**characterised in that**
the deep-drawing membrane (13) is formed as a varnish layer having a layer thickness in the range of from 10µm to 200µm, preferably in the range of from 20µm to 100µm further preferably in the range of from 25µm to 75µm, and/or the deep-drawing membrane (13) is formed from polyurethane, and/or the deep-drawing membrane (13) is formed to be transparent, translucent or opaque, and/or the deep-drawing membrane (13) has a decoration or a motif, and/or the deep-drawing membrane (13) is not formed over the full surface, in particular wherein the deep-drawing membrane (13) is not formed in an edge region of the transfer film (1), and/or the deep-drawing membrane (13) has a handling aid in its edge region for removing the deep-drawing membrane (13).

3. Transfer film (1) according to one of the preceding claims,
**characterised in that**
the deep-drawing membrane (13) is formed to be stretchable by 500% to over 1500% at a deep-drawing temperature in the range of from 130°C to 160°C, and/or the deep-drawing membrane (13) is formed as a printed layer, and/or the deep-drawing layer (13) is formed from several layers, and/or the deep-drawing membrane (13) is formed as a homogenous overall layer.

4. Transfer film (1) according to one of the preceding claims,
**characterised in that**
the transfer ply (15) is formed as a multi-layer body formed from transfer layers (151 to 153), and/or the transfer ply (15) comprises a first transfer layer (151) facing the deep-drawing membrane (13), a second transfer layer (152) and a third transfer layer (153), in particular wherein the first transfer layer (151) is formed as a protective layer, preferably wherein the protective layer is formed as a protective varnish made from a PMMA-based varnish having a layer thickness in the range of from 2µm to 50µm, preferably in the range of from 2µm to 30µm, and/or the protective layer is formed as a protective varnish made from a PMMA-based (PMMA = polymethylmethacrylate) varnish or a varnish based on a mixture of PVDF (PVDF = polyvinylidene fluoride) and PMMA, having a layer thickness in the range of from 2µm to 50µm, preferably in the range of from 5µm to 30µm.

5. Transfer film (1) according to claim 4,
**characterised in that**
the second transfer layer (152) is formed as a one- or multi-layer decorative layer, in particular wherein the second transfer layer (152) is formed as a colour layer, preferably wherein the colour layer is formed from a PMMA-based varnish having a layer thickness in the range of from 1µm to 10µm.

6. Transfer film (1) according to one of claims 4 to 5,
**characterised in that**
the third transfer layer (153) is formed as a primer, in particular wherein the primer is formed with a layer thickness in the range of from 1 to 5µm.

7. Transfer film (1) according to one of the preceding claims,
**characterised in that**
a first release layer (12) is arranged between the carrier film (11) and the deep-drawing membrane (13), and a second release layer (14) is arranged between the deep-drawing membrane (13) and the transfer ply (15), in particular wherein the first release layer (12) and/or the second release layer (14) consist/consists of a wax and/or is/are formed from Montanic acid esters or polyethylene and/or have/has a layer thickness smaller than 1µm in particular smaller than 0.1µm.

8. Transfer film (1) according to claim 7,
**characterised in that**,
due to the first release layer (12) arranged between the carrier film (11) and deep-drawing membrane (13), the release force of the carrier film (11) from the deep-drawing membrane (13) is 5 or 10 times smaller than the release force of the deep-drawing membrane (13) from the transfer ply (15) due to the second release layer (14) arranged between the deep-drawing membrane (13) and the transfer ply (15), in particular wherein the first release layer (12) is formed from polyethylene wax and the second release layer (14) is formed from Montanic acid esters.

9. Transfer film according to one of claims 7 to 8,
**characterised in that**,
due to the second release layer arranged between the deep-drawing membrane (13) and the transfer ply (15), the release force of the deep-drawing membrane (13) is 30 to 70% smaller than the adhesive strength of two adjacent transfer layers (151 to 153).

10. Use of a transfer film (1) according to one of claims 1 to 9 in an IMD process and/or in an insert-moulding process and/or in a TOM process.

11. Method for manufacturing a transfer film (1), in particular a transfer film according to one of claims 1 to 9, having a carrier film (11), a transfer ply (15) which can be detached from the carrier film, and a deep-drawing membrane (13) arranged between the carrier film (11) and the transfer ply (15),
**characterised in that**
the deep-drawing membrane (13) is manufactured or applied by means of a casting process or by means of screen printing, gravure printing, flexographic printing or inkjet printing, and the deep-drawing membrane (13) is formed to be stretchable by 200% at a deep-drawing temperature in the range of from 130°C to 160°C.

12. Method according to claim 11,
**characterised in that**
the deep-drawing membrane (13) is manufactured in several successive passages or from several layers, in particular wherein an applied layer for forming the deep-drawing membrane (13) is at least partially dried, in particular surface-dried, before a further layer is applied on it for forming the deep-drawing membrane (13) and/or is completely or thoroughly dried before a further layer for forming the deep-drawing membrane (13) is applied on it.

13. Method according to claim 11 or 12,
**characterised in that**
a following layer for forming the deep-drawing membrane (13) is applied in such a way that it dissolves the previously applied layer at least on the surface, such that a homogenous overall layer is preferably formed.

14. Method for coating a component (5) by means of a transfer film (1) according to one of claims 1 to 9, in particular having a transfer ply (15) of a transfer film (1) according to one of claims 1 to 9.

15. Method according to claim 14,
**characterised in that**
the method is designed as an IMD process, which comprises an insertion of the transfer film (1) into an injection moulding tool and a back injection of the transfer film (1) with a plastic,
wherein the carrier film (11) of the transfer film (1) is removed after the back injection and wherein the deep-drawing membrane (13) is removed together with the carrier film (13) or at a later point in time, in particular just before or only when the component is inserted, and/or the process is designed as an insert-moulding process, which comprises a lamination of a substrate (2), a deep-drawing of the laminated substrate (2) and a back injection of the deep-drawn substrate (2) with a thermoplastic plastic,
wherein the carrier film (11) of the transfer film (1) is removed from the substrate (2) after the lamination of the substrate (2), and
wherein the deep-drawing membrane (13) is removed from the back-injected substrate (2) after the back injection, and/or the method is designed as a TOM process, which comprises a lamination of a substrate (2), a coating of the back side of the substrate (2) with a TOM primer (16) and the application of the laminated and primed substrate (2) onto a three-dimensional component (5),
wherein the carrier film (11) of the transfer film (1) is removed before or after the coating of the substrate (2),
and wherein the deep-drawing membrane (13) is removed from the transfer ply (15) after the application of the laminated and primed substrate (2) onto the component (5), and/or the method is designed as a TOM process, which comprises an application of the transfer film (1) onto a three-dimensional component (5),
wherein the carrier film (11) is removed from the deep-drawing membrane (13) before the application of the transfer film (1) onto the component (5), and
wherein the deep-drawing membrane (13) is removed from the transfer ply (15) after the application of the transfer film (1) onto the component (5).

## Revendications

1. Film de transfert (1), comprenant un film de support (11) et une strate de transfert (15) pouvant être détachée du film de support, dans lequel le film de transfert (11) est prévu pour transférer la strate de transfert (15) sur un composant (5), en particulier sur un composant (5) tridimensionnel,
**caractérisé en ce**
**qu'**une membrane d'emboutissage (13) est disposée entre le film de support (11) et la strate de transfert (15), et que la membrane d'emboutissage (13) est réalisée de manière extensible de 200 % à une température d'emboutissage dans la plage de 130 °C à 160 °C.

2. Film de transfert (1) selon la revendication 1,
**caractérisé en ce**
**que** la membrane d'emboutissage (13) est réalisée en tant qu'une couche de vernis avec une épaisseur de couche dans la plage de 10 µm à 200 µm, de préférence dans la plage de 20 µm à 100 µm, de manière davantage préférée dans la plage de 25 µm à 75 µm, et/ou que la membrane d'emboutissage (13) est réalisée à partir de polyuréthane, et/ou que la membrane d'emboutissage (13) est réalisée de manière transparente, translucide ou opaque, et/ou que la membrane d'emboutissage (13) présente un décor ou un motif, et/ou que la membrane d'emboutissage (13) n'est pas réalisée sur toute la surface, en particulier dans lequel la membrane d'emboutissage (13) n'est pas réalisée dans une zone de bord du film de transfert (1), et/ou que la membrane d'emboutissage (13) présente dans sa zone de bord une aide à la manipulation pour retirer la membrane d'emboutissage (13).

3. Film de transfert (1) selon l'une quelconque des revendications précédentes,
**caractérisé en ce**
**que** la membrane d'emboutissage (13) est réalisée de manière extensible de 500 % à plus de 1 500 % à une température d'emboutissage dans la plage de 130 °C à 160 °C, et/ou que la membrane d'emboutissage (13) est réalisée en tant que couche imprimée, et/ou que la membrane d'emboutissage (13) est réalisée à partir de plusieurs couches, et/ou que la membrane d'emboutissage (13) est réalisée en tant que couche globale homogène.

4. Film de transfert (1) selon l'une quelconque des revendications précédentes,
**caractérisé en ce**
**que** la strate de transfert (15) est réalisée en tant qu'un corps multicouche réalisé à partir de couches de transfert (151 à 153), et/ou que la strate de transfert (15) comprend une première couche de transfert (15) tournée vers la membrane d'emboutissage (13), une deuxième couche de transfert (152) et une troisième couche de transfert (153), en particulier dans lequel la première couche de transfert (151) est réalisée en tant qu'une couche de protection, de préférence dans lequel la couche de protection est réalisée en tant qu'un vernis de protection composé d'un vernis à base de PMMA avec une épaisseur de couche dans la plage de 2 µm à 50 µm, de manière préférée dans la plage de 2 µm à 30 µm, et/ou que la couche de protection est réalisée en tant qu'un vernis de protection composé d'un vernis à base de PMMA (PMMA = polyméthylmétacrylate) ou d'un vernis à base d'un mélange composé de PVDF (PVDF = fluorure de polyvinylidène) et de PMMA, avec une épaisseur de couche dans la plage de 2 µm à 50 µm, de manière préférée dans la plage de 5 µm à 30 µm.

5. Film de transfert (1) selon la revendication 4,
**caractérisé en ce**
**que** la deuxième couche de transfert (152) est réalisée en tant qu'une couche décorative mono- ou multicouche, en particulier dans lequel la deuxième couche de transfert (152) est réalisée en tant qu'une couche colorée, de manière préférée dans lequel la couche colorée est réalisée à partir d'un vernis à base de PMMA avec une épaisseur de couche dans la plage de 1 µm à 10 µm.

6. Film de transfert (1) selon l'une quelconque des revendications 4 à 5,
**caractérisé en ce**
**que** la troisième couche de transfert (153) est réalisée en tant qu'un apprêt, en particulier dans lequel l'apprêt est réalisé avec une épaisseur de couche dans la plage de 1 à 5 µm.

7. Film de transfert (1) selon l'une quelconque des revendications précédentes,
**caractérisé en ce**
**qu'**une première couche détachable (12) est disposée entre le film de support (11) et la membrane d'emboutissage (13), et qu'une deuxième couche détachable (14) est disposée entre la membrane d'emboutissage (13) et la strate de transfert (15), en particulier dans lequel la première couche détachable (12) et/ou la deuxième couche détachable (14) sont ou est constituée (s) d'une cire et/ou sont ou est réalisée(s) à partir d'un ester de l'acide montanique ou de polyéthylène et/ou présente(nt) une épaisseur de couche inférieure à 1 µm, en particulier inférieure à 0,1 µm.

8. Film de transfert (1) selon la revendication 7,
**caractérisé en ce**
**que** la force de détachement du film de support (11) de la membrane d'emboutissage (13) est inférieure du facteur 5 à 10, en raison de la première couche détachable (12) disposée entre le film de support (11) et la membrane d'emboutissage (13), à la force de détachement de la membrane d'emboutissage (13) de la strate de transfert (15) en raison de la deuxième couche détachable (14) disposée entre la membrane d'emboutissage (13) et la strate de transfert (15), en particulier dans lequel la première couche détachable (12) est réalisée à partir de cire de polyéthylène et la deuxième couche détachable (14) est réalisée à partir d'ester de l'acide montanique.

9. Film de transfert selon l'une quelconque des revendications 7 à 8,
**caractérisé en ce**
**que** la force de détachement de la membrane d'emboutissage (13) est inférieure de 30 à 70 %, en raison de la deuxième couche détachable disposée entre la membrane d'emboutissage (13) et la strate de transfert (15), à la force adhésive de deux couches de transfert (151 à 153) adjacentes.

10. Utilisation d'un film de transfert (1) selon l'une quelconque des revendications 1 à 9 dans un procédé IMD [in-mold décoration, décoration dans le moule] et/ou dans un procédé de moulage d'insert et/ou dans un procédé TOM [Typesetting-Output-Microfilm, microfilm en sortie de composition].

11. Procédé de fabrication d'un film de transfert (1), en particulier d'un film de transfert selon l'une quelconque des revendications 1 à 9, présentant un film de support (11), une strate de transfert (15) pouvant être détachée du film de support et une membrane d'emboutissage (13) disposée entre le film de support (11) et la strate de transfert (15),
**caractérisé en ce**
**que** la membrane d'emboutissage (13) est fabriquée ou appliquée au moyen d'un procédé de coulée ou au moyen d'une sérigraphie, d'une héliogravure, d'une impression en flexographie ou d'une impression à jet d'encre ou d'une impression inkjet, et que la membrane d'emboutissage (13) est réalisée de manière extensible de 200 % à une température d'emboutissage dans la plage de 130 °C à 160 °C.

12. Procédé selon la revendication 11,
**caractérisé en ce**
**que** la membrane d'emboutissage (13) est fabriquée lors de plusieurs passes se suivant les unes les autres ou à partir de plusieurs couches, en particulier dans lequel une couche appliquée est séchée au moins en partie, en particulier est séchée en surface, pour réaliser la membrane d'emboutissage (13) avant qu'une autre couche ne soit appliquée dessus pour réaliser la membrane d'emboutissage (13) et/ou est totalement ou complètement séchée avant qu'une autre couche ne soit appliquée dessus pour réaliser la membrane d'emboutissage (13).

13. Procédé selon la revendication 11 ou 12,
**caractérisé en ce**
**qu'**une couche suivante est appliquée pour réaliser la membrane d'emboutissage (13) de telle manière qu'elle adhère au moins en surface à la couche appliquée au préalable de sorte que de manière préférée une couche globale homogène est réalisée.

14. Procédé de revêtement d'un composant (5) au moyen d'un film de transfert (1) selon l'une quelconque des revendications 1 à 9, en particulier avec une strate de transfert (15) d'un film de transfert (1) selon l'une quelconque des revendications 1 à 9.

15. Procédé selon la revendication 14,
**caractérisé en ce**
**que** le procédé est réalisé en tant que procédé IMD, qui comprend un placement du film de transfert (1) dans un moule de coulée par injection et une pulvérisation côté arrière d'une matière synthétique sur le film de transfert (1),
dans lequel le film de support (11) du film de transfert (1) est retiré après la pulvérisation côté arrière et dans lequel la membrane d'emboutissage (13) est retirée conjointement avec le film de support (13) ou ultérieurement, en particulier brièvement avant ou seulement lors de l'insertion du composant, et/ou que le procédé est réalisé en tant que procédé de moulage d'insert, qui comprend un contre-collage d'un substrat (2), un emboutissage du substrat (2) contre-collé et une pulvérisation côté arrière du substrat (2) embouti avec une matière synthétique thermoplastique,
dans lequel le film de support (11) du film de transfert (1) est retiré du substrat (2) après le contre-collage du substrat (2), et
dans lequel la membrane d'emboutissage (13) est retirée du substrat (2) pulvérisé côté arrière après la pulvérisation côté arrière, et/ou que le procédé est réalisé en tant qu'un procédé TOM, qui comprend un contre-collage d'un substrat (2), un revêtement du côté arrière du substrat (2) avec un apprêt TOM (16) et l'application du substrat (2) contre-collé ou doté d'un apprêt sur un composant (5) tridimensionnel,
dans lequel le film de support (11) du film de transfert (1) est retiré avant ou après le revêtement du substrat (2),
et dans lequel la membrane d'emboutissage (13) est retirée de la strate de transfert (15) après l'application du substrat (2) contre-collé et doté d'un apprêt sur le composant (5), et/ou que le procédé est réalisé en tant qu'un procédé TOM, qui comprend une application du film de transfert (1) sur un composant (5) tridimensionnel,
dans lequel le film de support (11) est retiré de la membrane d'emboutissage (13) avant l'application du film de transfert (1) sur le composant (5), et
dans lequel la membrane d'emboutissage (13) est retirée de la strate de transfert (15) après l'application du film de transfert (1) sur le composant (5) .
